# EUROPEAN PATENT SPECIFICATION

(11) **EP 3 497 781 B1**
(45) Date of publication and mention of the grant of the patent: **30.09.2020**
(21) Application number: 17748800.4
(22) Date of filing: 09.08.2017
(51) Int. Cl.: H02M 7/44, H02J 3/38

(54) **RECOVERY OF DEGRADED PHOTOVOLTAIC PANEL**
RÜCKGEWINNUNG VON DEGRADIERTEN FOTOVOLTAIKPANEELEN
RÉCUPÉRATION DE PANNEAU PHOTOVOLTAÏQUE DÉGRADÉ

(30) Priority: 12.08.2016 EP 16184112
(43) Date of publication of application: 19.06.2019
(73) Proprietor: MARICI Holdings The Netherlands B.V., 3068AX Rotterdam (NL)
(72) Inventor: PARK, Ki-Bum, 5442 Fislisbach (CH); SOEIRO, Thiago Batista, 2636 Schipluiden (NL); SCHWEIZER, Mario, 5406 Rütihof (CH); MASTELLONE, Silvia, 5415 Nussbaumen (CH)
(74) Representative: Kolster Oy Ab
(86) International application number: PCT/EP2017/070248
(87) International publication number: WO 2018/029278

(56) References cited:
- EP-A1- 2 234 264
- EP-A1- 2 773 036
- US-A1- 2014 139 031

## Description

### FIELD OF THE INVENTION

The invention relates to the field of photovoltaic panels. In particular, the invention relates to an inverter system, a photovoltaic panel system and a method for operating the photovoltaic panel system.

### BACKGROUND OF THE INVENTION

Potential induced degradation (PID) is a phenomenon which causes significant reduction in power generation capability of photovoltaic panels. Exposure of a photovoltaic panel to a high negative potential is the major cause of PID, which may gradually reduce the rated output power of a photovoltaic panel after a few years of service.

In the case of a galvanically isolated inverter system, which is used for transforming the DC voltage from the photovoltaic panel into an AC voltage to be supplied to a grid, the problem of PID can be easily solved by grounding the negative pole of the photovoltaic panel. On the other hand, typical transformerless inverters, which normally apply a negative potential to the negative pole of the photovoltaic panel, do not allow connecting the negative pole directly to the earth ground since this would cause a ground short circuit.

One type of PID solution for a photovoltaic panel interconnected with a transformerless inverter is based on a special topology which enables direct connection of the negative pole of the photovoltaic panel to the ground. For example, US 2011 235 384 A1 shows a photovoltaic panel system with an inverter that allows to connect the negative pole of the photovoltaic panel to ground. A drawback of such a solution may be that the performance of the special topology is not optimal in terms of efficiency, cost, and complexity.

Further solutions exploit that PID may be corrected by applying a positive potential to the photovoltaic panel. For example, a PID corrector, which applies a positive voltage to the photovoltaic panel during the night, may be connected to the photovoltaic panel. Such a corrector only may be used when the transformerless inverter is disconnected from the grid, when the corrector is operating. That is, ancillary services may not be available during operation of the corrector.

EP 2 773 036 A1 discloses the features of the preamble of claim 1 and relates to a method for DC-AC-conversion for photovoltaic panels, wherein each photovoltaic panel is connected with its outputs with a converter. The converter has a DC link and a switch for disconnecting a negative output from the DC link.

EP 2 234 264 A1 and US 2014/0139031 A1 show photovoltaic panels interconnected via a converter with an electrical grid.

### DESCRIPTION OF THE INVENTION

It is an objective of the invention to provide a simple PID recovery solution without the need for restricting to specific topologies for the inverter system.

This objective is achieved by the subject-matter of the independent claims. Further exemplary embodiments are evident from the dependent claims and the following description.

An aspect of the invention relates to an inverter system for a photovoltaic panel. The inverter system is used for converting the electrical DC voltage produced by the photovoltaic panel into an AC voltage to be supplied to an electrical grid. In general, the inverter system may comprise an inverter with semiconductor switches that are controlled by a controller to generate the AC voltage.

According to an embodiment of the invention, the inverter system comprises an inverter adapted for transforming a DC voltage from the photovoltaic panel into an AC voltage to be supplied to an electrical grid; a DC link interconnected with the inverter and providing a positive DC link output connectable to a positive pole of the photovoltaic panel and a negative DC link output connectable to a negative pole of the photovoltaic panel; a switch, which may be positioned between the negative pole and the negative DC link output, for disconnecting the negative pole of the photovoltaic panel from the DC link; and a controller for controlling the inverter and the switch. The controller is adapted for opening the switch, such that the photovoltaic panel is solely supplied by the positive DC link output.

For example, the inverter, which may be seen as the main inverter of the inverter system, may comprise a three-phase or single-phase input at the AC side, which may be interconnected with the electrical grid. On the DC side, the inverter may be interconnected with a DC link, which may comprise a capacitor. To this DC link, which provides the positive and the negative DC link output, the photovoltaic panel may be connected.

During normal operation of the inverter and the photovoltaic panel, when sun is shining on the photovoltaic panel, the positive pole of the photovoltaic panel is on positive potential (such as +V_{DC}/2, where V_{DC} is the DC link voltage) and the negative pole is on negative potential (such as -V_{DC}/2). It has to be noted that all voltages mentioned herein may be determined from ground, i.e. the ground potential may have a voltage of 0 V. Thus, during normal operation, PID may take place.

For recovery operation of the photovoltaic panel, for example during night-time, the inverter system comprises a switch that is positioned in the negative output and/or that may be opened by the controller. For example, the switch may be a mechanical relay or a semiconductor switch. When the switch is opened, the negative pole of the photovoltaic panel is disconnected from the negative DC link output. The positive pole of the photovoltaic pole remains on the potential of the positive DC link output. Since during the night, when the recovery operation may take place, the photovoltaic panel does not generate a voltage or nearly no voltage between its positive and negative pole, also the negative pole is shifted (or nearly shifted) to the potential of the positive DC link output. Thus, the effect of PID may be reversed during recovery operation.

No special topology for the inverter is necessary. The inverter may stay connected with the electrical grid and/or also an auxiliary power supply of the inverter system supplied by the DC link may stay in operation. Thus, the performance of the inverter is not affected, while a connection of the inverters to the electrical grid is still allowed during recovery operation, for example during night-time for performing ancillary services. Furthermore, the solution can be implemented and integrated into an inverter, without the need for a complicated additional system.

According to an embodiment of the invention, the controller is adapted for determining, when a voltage produced by the photovoltaic panel falls below a threshold voltage and for then opening the switch. The switch may be opened and closed automatically by the controller. The determination, whether the photovoltaic panel may be recovered, i.e. produces no or nearly no voltage, may be performed directly or indirectly.

For example indirectly, the determination may be based on a clock of the controller, i.e. it may be assumed that during a specific time interval (that may be called night), the sun is down and therefore no light is falling onto the photovoltaic panel. For example directly, that the controller receives measurement values from the inverter system, upon which the actual voltage of the photovoltaic panel may be determined.

According to an embodiment of the invention, the controller is adapted for maintain a DC link voltage, when the switch is opened. During recovery operation, the inverter may supply the DC link with voltage from the electrical grid to maintain the voltage at the positive DC link output.

According to an embodiment of the invention, the inverter system further comprises an additional power supply for generating an additional DC voltage; and a second switch, which may be interconnected between the positive pole and the positive DC link output, for interconnecting the photovoltaic panel with the additional power supply, such that the additional DC voltage from the additional power supply is added to a positive DC link voltage. For example, the second switch may be connected in parallel to the additional power supply and during recovery, the controller may open the switch, such that the additional power supply is connected in series with the DC link. The additional power supply may be supplied with electrical power from the electrical grid.

Since day-time is usually longer than night-time, the exposure time of the photovoltaic panel to the negative potential from the negative DC link output may be longer than that to the positive potential of the positive DC link output during the PID recovery operation. The higher voltage produced by the additional power supply may be used to fully recover from PID during a short time.

Alternatively or additionally, a DC link voltage may be increased during the recovery operation by corresponding control of the controller.

According to an embodiment of the invention, the additional DC voltage is higher than 100 V, for example more than 1.000 V. It has to be noted that for effective recovery from PID, higher voltages as provided by the DC link may be needed. With the additional power supply, which may have lesser power than the main inverter, these high voltages may be reached.

According to an embodiment of the invention, the inverter system further comprises an auxiliary power supply for supplying the controller with power. Usually, every inverter system has an auxiliary power supply, which is used for supplying electronic components of the system with power and/or which produces a rather low voltage (for example below 20 V). Such auxiliary power supply may be supplied by the DC link of the inverter or directly by the electrical grid.

According to an embodiment of the invention, the additional power supply has a common transformer with the auxiliary power supply. The additional power supply and the auxiliary power supply may be integrated into each other. Both may be flyback converters with windings on a common core.

According to an embodiment of the invention, the additional power supply is supplied by the auxiliary power supply. On the other hand, the additional power supply may be connected to an output of the auxiliary power supply and may transform the voltage from the auxiliary power supply into a higher voltage.

According to an embodiment of the invention, the inverter is a transformerless inverter, such that the photovoltaic panel is galvanically connected with the electrical grid during normal operation of the inverter system. Since the negative pole of the photovoltaic panel is galvanically disconnected from the inverter system during recovery operation, there is no need for a galvanically separating inverter system, which is usually done with a transformer.

A further aspect of the invention relates to a photovoltaic panel system, which comprises an inverter system as described in the above and in the following and a photovoltaic panel connected to the converter system.

According to an embodiment of the invention, the negative pole of the photovoltaic panel is floating, when the switch in the negative DC link output is opened. In other words, the negative pole of the photovoltaic panel may be completely disconnected from a potential and/or may only be connected via the photovoltaic panel with the positive DC link output.

A further aspect of the invention relates to a method for recovering a degraded photovoltaic panel. For example, the method may be performed by the controller of the photovoltaic panel system.

According to an embodiment of the invention, the method comprises: during normal operation, converting a DC voltage from the photovoltaic panel with an inverter into an AC voltage supplied to an electrical grid, wherein the photovoltaic panel is connected with a positive pole and a negative pole to a DC link of the inverter; and during recovery operation, disconnecting the negative pole of the photovoltaic panel from the DC link of the inverter and supplying the positive pole of the photovoltaic panel with a positive voltage from the DC link. When recovery operation is started, the controller may simply open the switch.

According to an embodiment of the invention, the method further comprises: closing a switch for connecting the negative pole of the photovoltaic panel with a negative output of the DC link during normal operation; opening the switch for disconnecting the negative pole of the photovoltaic panel from the negative output of the DC link during recovery operation.

According to an embodiment of the invention, the method further comprises: maintaining a DC link voltage in the DC link during recovery operation.

According to an embodiment of the invention, the method further comprises: interconnecting an additional power supply between the positive pole of the photovoltaic panel and a positive output of the DC link, for raising a voltage supplied to the positive pole of the photovoltaic panel. This may be done with a further, second switch in the positive DC link output, which is controlled by the controller.

According to an embodiment of the invention, the method further comprises: determining whether the photovoltaic panel is producing a voltage (for example higher than a threshold) between its positive and negative pole. As mentioned above, this determination may be performed directly, i.e. via measurement in the photovoltaic panel system or indirectly, with a clock. In the latter case, it may be assumed that during night-time, which may be defined as a time interval in the controller, no sun is shining and the photovoltaic panel does not produce a voltage between its positive and negative pole.

When night-time is determined, the controller may switch to recovery operation. When day-time is determined, i.e. the opposite of night-time, the controller may switch to normal operation.

According to an embodiment of the invention, the determination, whether the photovoltaic panel is producing a voltage, is based on an actual time, which may be provided by a clock of the controller. It also may be possible that the determination, whether the photovoltaic panel is producing a voltage, is based on a voltage measurement.

It has to be understood that features of the method as described in the above and in the following may be features of the inverter system and/or the photovoltaic panel system as described in the above and in the following, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a photovoltaic panel system according to an embodiment of the invention.
Fig. 2 schematically shows a photovoltaic panel system according to a further embodiment of the invention.
Fig. 3 schematically shows an embodiment of an additional power supply for the photovoltaic panel system of Fig. 2.
Fig. 4 schematically shows a further embodiment of an additional power supply for the photovoltaic panel system of Fig. 2.
Fig. 5 shows a flow diagram for a method for recovering a photovoltaic panel according to an embodiment of the invention.
Fig. 6 shows a diagram with a voltage at the negative pole of a photovoltaic panel produced with the method of Fig. 5.
Fig. 7 shows a diagram with a voltage at the negative pole of a photovoltaic panel produced with the method of Fig. 5.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

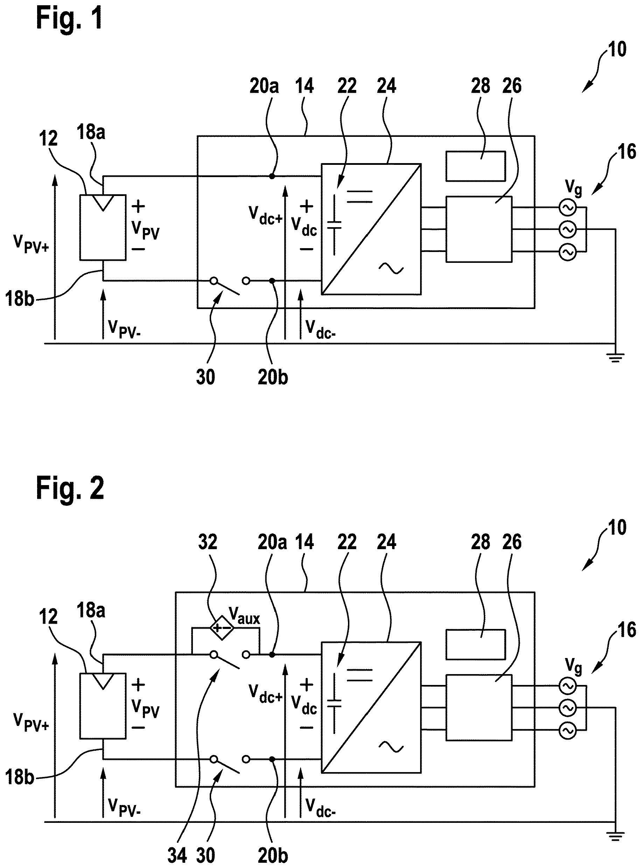

Fig. 1 shows a photovoltaic panel system 10 comprising a photovoltaic panel 12, which is interconnected via an inverter system 14 with an electrical grid 16.

The photovoltaic panel 12 has a positive pole 18a and a negative pole 18b. When light (usually sunlight) is shining on the photovoltaic panel 12, a positive voltage V_{PV} is generated by the photovoltaic panel 12 between the positive pole 18a and the negative pole 18b. When no or nearly no light is shining on the photovoltaic panel, the voltage V_{PV} between the poles 18a, 18b is substantially zero.

The photovoltaic panel is connected with its positive pole 18a with a positive DC link output 20a of the inverter system 14 and with its negative pole 18b with a negative DC link output 20b of the inverter system 14. The outputs 20a, 20b are provided by a DC link 22, which are interconnected with a main inverter 24 of the inverter system. The inverter 24 may be a voltage source inverter, for example, a two or more level converter based on half-bridges. The DC link may comprise a capacitor interconnected between the outputs 20a, 20b.

On an AC side, the inverter 24 may be connected via a filter 26 with the electrical grid 16. The grid 16 may be a three-phase or single-phase grid and/or the inverter 24 may be a single-phase or three-phase inverter 24. It may be possible that a relay is situated between the filter 26 and the grid 16, which may be used for disconnecting the inverter system 14 from the grid 16. It has to be noted that the inverter system 14 may be transformerless, i.e. may contain no transformer that galvanically decouples the photovoltaic panel 12 from the electrical grid 16.

Furthermore, the inverter system 14 comprises a controller 28, which is adapted for controlling the inverter 24. During a normal operation of the system 10, the photovoltaic panel produces a voltage V_{PV} which is supplied to the DC link, which then has the equal voltage V_{DC}. The positive voltage V_{PV+} at the positive pole 18a is equal to the positive DC link voltage V_{DC+}, which has a value of +V_{DC}/2 with respect to ground. The negative voltage V_{PV-} at the negative pole 18b is equal to the negative DC link voltage V_{DC-}, which has a value of -V_{DC}/2 with respect to ground. The inverter 24, under the control of the controller 28, converts the DC link voltage V_{DC} into the single-phase or three-phase voltage V_{g} supplied to the electrical grid 16.

Since the negative voltage V_{PV-} is negative with respect to ground, potential induced degradation (PID) takes place during normal operation.

For mitigating or counterbalancing this PID, the inverter system 14 comprises a switch 30 in the negative DC link output 20b, which is adapted for disconnecting the negative pole 18b of the photovoltaic panel 12 from the negative DC link 20b. The switch 30 may be opened and closed by the controller 28.

When the switch 30 is opened, the negative pole 18b of the photovoltaic panel 12 is disconnected from the potential provided by the negative output 20b of the DC link 22 and therefore may be free floating, when this is the only connection point of the negative pole 18b with the system 10. Thus, the voltage at the negative pole 18b is the voltage of the positive pole 18a, which, in Fig. 1, is the potential of the positive DC link output 20a, i.e. +V_{DC}/2, minus the voltage V_{PV} generated by the photovoltaic panel 12. In the night-time, the voltage V_{PV} is substantially zero and the negative pole 18b is set to about the voltage provided by the positive output 20a of the DC link 22.

Thus, when opening the switch 30 during night-time in a recovery operation mode, the PID of the photovoltaic panel 30 may be reversed.

The effect of the recovery is dependent on the height of the positive voltage applied to the photovoltaic panel 12. For example, the voltage at the positive output 20a of the DC link may be raised by operating the inverter 24 in a corresponding way.

As shown in Fig. 2, an alternative (or addition) to this is an additional power supply 32, which provides a voltage Vₐᵤₓ that is added to the voltage provided by the positive output 20a. For example, the additional power supply 32 may be connected between the positive pole 18a and the positive output 20a of the DC link 22. A further switch 34 connected in parallel to the additional power supply 32 may be opened to connect the additional power supply 32 to the positive pole 18a and may be closed to disconnect it. Also, the further switch 34 may be controlled by the controller 28.

During normal day-time operation, both of the switches 30, 34 are closed. During night-time, for recovery operation, both switches may be opened and the additional voltage Vₐᵤₓ is applied between the photovoltaic panel 12 and the DC link 22. In this case, the potential of the negative pole 18b of the photovoltaic panel 12 may reach the sum of V_{DC}/2 and Vₐᵤₓ, i.e., the potential is increased by Vₐᵤₓ, which accelerates PID recovery.

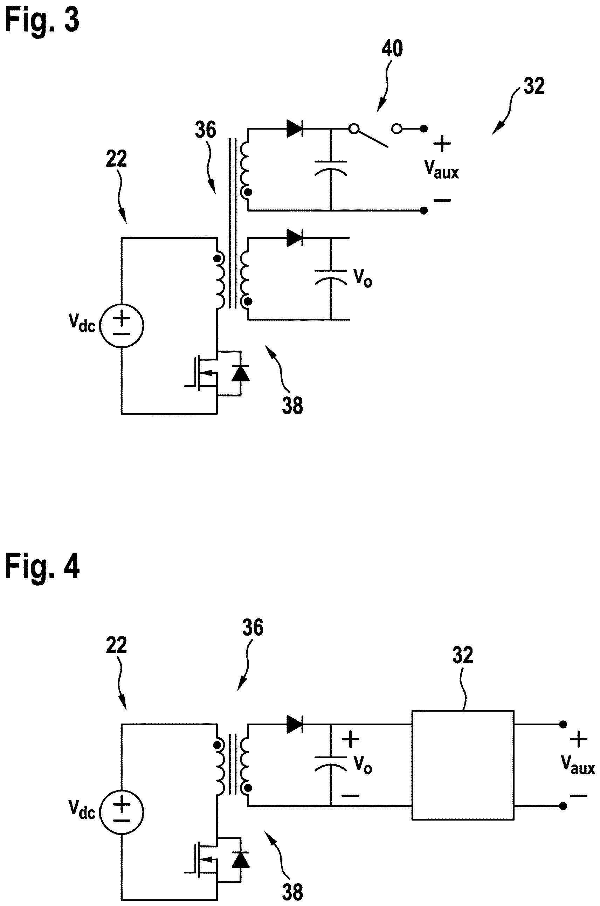

Fig. 3 shows an embodiment of an additional power supply 32, which is integrated into an auxiliary power supply 36 of the inverter system 14. The auxiliary power supply 36, which usually is used to feed the power for electronics, gate drivers, fans inside the inverter 24, and in particular the controller 28, may be supplied by the DC link 22 and/or may be a flyback converter as shown in Fig. 3.

The auxiliary power supply 36 and the additional power supply 32 share a transformer 38 with a primary winding. A first secondary winding of the transformer 38, which is part of a first flyback converter, may generate the auxiliary supply voltage Vo. A second secondary winding of the transformer 38, which is part of a second flyback converter for the additional power supply 32, generates the additional voltage Vₐᵤₓ.

With a switch 40, the additional power supply 32 may be disconnected from the negative pole 18a and the negative output 20 (see Fig. 2). This switch 40, under the control of the controller 28, may be closed during recovery operation and opened during normal operation. Thus, Vₐᵤₓ may be generated by extending the secondary winding of the transformer 38 of the auxiliary power supply 36.

Fig. 4 shows an alternative embodiment for an additional power supply 32, which may comprise a separate converter, which is supplied by the auxiliary power supply 36. The auxiliary power supply 36 may be designed like in Fig. 3.

In Fig. 4, the additional power supply 32 is connected to the output of the auxiliary power supply 36. In this case, no modification of an existing auxiliary power supply 36 is required and the additional power supply may only need a small isolation. Since the additional power supply 32 only need to sustain the specific voltage Vₐᵤₓ without feeding power, a very low-power and/or low-cost implementation may be feasible.

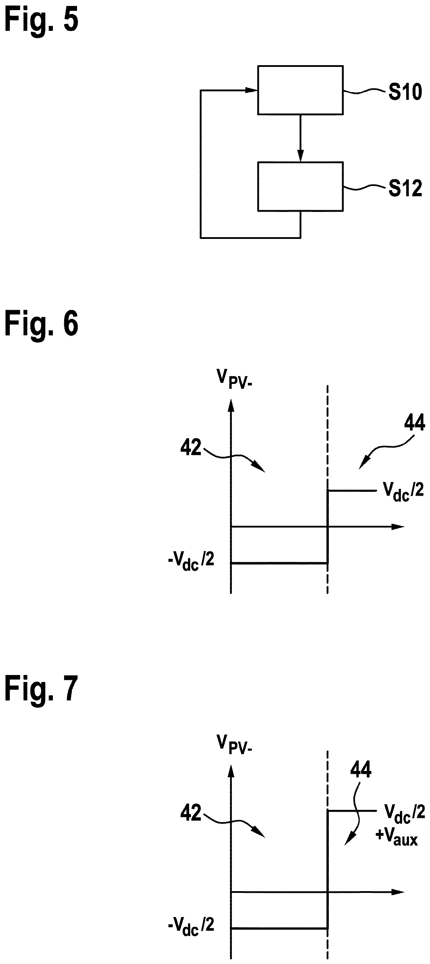

Fig. 5 illustrates a method for recovering a degraded photovoltaic panel 12, which may be performed by the system 10 under the control of the controller 28.

In step S10, the system 10 is in normal operation 42 (see Fig. 6 and Fig. 7). During normal operation 42, the system 10 converts the DC voltage V_{PV} from the photovoltaic panel 12 with the inverter 24 into the AC voltage V_{g}, which is supplied to the electrical grid 16.

Normal operation 42 is usually performed during daytime, when the voltage V_{PC} produced by the photovoltaic panel 12 is substantially different from 0.

In step S12, the system 10 is in recovery operation 44. During recovery operation 44, the negative pole 18b of the photovoltaic panel 12 is disconnected from the negative DC link output 20b of the inverter system 14. Only a positive voltage is supplied from the inverter system 10 to the positive pole 18a of the photovoltaic panel 12. It may be that the DC link voltage V_{DC} in the DC link 22 is maintained during recovery operation 44 by switching the inverter 24 correspondingly. The power for maintaining the DC link voltage V_{DC} may be supplied by the grid 16.

Recovery operation 42 is usually performed during night-time, when the voltage V_{PC} produced by the photovoltaic panel 12 is substantially 0.

Fig. 6 and 7 show diagrams with the voltage V_{PV}- of the negative pole 18b of the photovoltaic panel 12. During normal operation 42, the voltage V_{PV-} is equal to the negative DC link voltage V_{DC-}, since the negative pole 18b is connected via the switch 30 with the negative DC link output 20b.

When the system 10 is in normal operation 42 (and also in recovery operation), the controller 10 determines, for example continuously and/or repeatedly, whether the photovoltaic panel 12 is producing a voltage V_{PV} between its positive pole 18a and negative pole 18b. The determination, whether the photovoltaic panel 12 is producing a voltage, may be based on an actual time and/or a voltage measurement.

For example, a timer in the controller 28 may determine that recovery operation 44 should be started, when a specific daytime has been reached, i.e. the night-time has begun. It also may be possible that the controller receives measurement values, from which the voltage V_{PC} may be determined and switches to recovery operation 44, when the voltage V_{PC} falls below a threshold value.

For starting recovery operation 44, the controller 28 disconnects the negative pole 18b of the photovoltaic panel 12 from the DC link 22 of the inverter 24 and supplies only the positive pole 18a of the photovoltaic panel 12 with at least the positive voltage V_{DC+} (i.e. V_{DC}/2) from the DC link 22. The switch 30 maintains open during recovery operation 44.

For the system 10 from Fig. 1, during recovery operation 44, the voltage V_{PV-} may be equal to the positive DC link voltage V_{DC+} as shown in Fig. 6.

With the system 10 of Fig. 2 it also may be possible that the controller 28 interconnects the additional power supply 32 between the positive pole 18a of the photovoltaic panel 12 and the positive output 20a of the DC link 22. This may be done by opening the switch 34 and closing the switch 40. Both switches may stay in this position during the whole recovery operation 44.

Thus, the voltage V_{PV+} at the positive pole 18a and, as shown in Fig. 7, the voltage V_{PV-} at the negative pole 18b may be raised up to V_{DC+} + Vₐᵤₓ (i.e. VDC/2 + Vₐᵤₓ), the sum of the positive DC link voltage V_{DC+} and the additional voltage Vₐᵤₓ. In general, the voltage V_{PV-} is V_{PV+} minus V_{PC}, which however, may be assumed to be 0 during night-time.

In both cases (Fig. 6 and Fig. 7), a recovery of the photovoltaic panel 12 takes place during recovery operation 44, which is completely on positive potential.

When the controller 28 determines that recovery operation should be ended and/or normal operation 42 should be started, which again may be based on an actual time and/or measurements, the switch 30 is closed for connecting the negative pole 18b of the photovoltaic panel 12 with the negative output 20b of the DC link 22. During normal operation, the switch 30 stays closed. Additionally, for the embodiment of Fig. 2 switch 34 may be closed and switch 40 may be opened.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: photovoltaic panel system
- 12: photovoltaic panel
- 14: inverter system
- 16: electrical grid
- 18a: positive pole
- 18b: negative pole
- 20a: positive output
- 20b: negative output
- 22: DC link
- 24: inverter
- 26: filter
- 28: controller
- 30: switch
- 32: additional power supply
- 34: switch
- 36: auxiliary power supply
- 38: transformer
- 40: switch
- 42: normal operation
- 44: recovery operation

## Claims

1. An inverter system (14) for a photovoltaic panel (12), the inverter system (14) comprising:
an inverter (24) adapted for transforming a DC voltage from the photovoltaic panel (12) into an AC voltage to be supplied to an electrical grid (16);
a DC link (22) interconnected with the inverter (24) and providing a positive DC link output (20a) connectable to a positive pole (18a) of the photovoltaic panel (12) and a negative DC link output (20b) connectable to a negative pole (18b) of the photovoltaic panel (12);
a switch (30) for disconnecting the negative pole (18b) of the photovoltaic panel (12) from the DC link (22);
a controller (28) for controlling the inverter (24) and the switch (30);
wherein the controller (28) is adapted for opening the switch (30), such that the photovoltaic panel (12) is solely supplyable by the positive DC link output (20a);
wherein the controller (28) is adapted for determining, when a voltage produced by the photovoltaic panel (12) falls below a threshold voltage, **characterized in that** the determination, whether the photovoltaic panel is producing a voltage, is based on an actual time, and
wherein the controller (28) is adapted for determining a night-time and for switching into a recovery operation, when the night-time is determined, wherein the controller is adapted for opening the switch (30) during recovery operation, such that the positive pole (18a) of the photovoltaic panel (12) is supplied with a positive voltage from the DC link (22), wherein the controller (28) is adapted for maintaining a DC link voltage during recovery operation, when the switch (30) is opened;
wherein the controller is adapted for determining a day-time and for switching to a normal operation, when a day-time is determined, wherein the controller is adapted for closing the switch (30) during normal operation for connecting the negative pole (18b) of the photovoltaic panel (12) with the negative output (20b) of a DC link (22).

2. The inverter system (14) of claim 1, further comprising:
an additional power supply (32) for generating an additional DC voltage;
a second switch (34) for interconnecting the photovoltaic panel (12) with the additional power supply (32), such that the additional DC voltage from the additional power supply (32) is added to a positive DC link voltage.

3. The inverter system (14) of claim 2,
wherein the additional DC voltage is higher than 100 V.

4. The inverter system (14) of claim 2 or 3, further comprising:
an auxiliary power supply (36) for supplying the controller (28) with power;
wherein the additional power supply (32) has a common transformer (38) with the auxiliary power supply (36).

5. The inverter system (14) of claim 2 or 3, further comprising:
an auxiliary power supply (36) for supplying the controller (28) with power;
wherein the additional power supply (32) is supplied by the auxiliary power supply (36).

6. The inverter system (14) of one of the preceding claims,
wherein the inverter (24) is a transformerless inverter, such that the photovoltaic panel (12) is galvanically connected with the electrical grid (16) during operation of the inverter system (14).

7. A photovoltaic panel system (10), comprising:
an inverter system (14) according to one of the previous claims; and
a photovoltaic panel (12) connected to the converter system;
wherein, when the switch (30) in the negative DC input (20b) is opened, the negative pole (18b) of the photovoltaic panel (12) is floating.

8. A method for recovering a degraded photovoltaic panel (12), the method comprising:
determining, when a voltage produced by the photovoltaic panel (12) falls below a threshold voltage, wherein the determination, whether the photovoltaic panel is producing a voltage, is based on an actual time;
switching to a recovery operation, when a night-time is determined, and switching to a normal operation, when a day-time is determined;
during normal operation, closing a switch (30) for connecting a negative pole (18b) of the photovoltaic panel (12) with a negative output (20b) of a DC link (22);
during normal operation, converting a DC voltage (V_{PV}) from the photovoltaic panel (12) with an inverter (24) into an AC voltage (V_{g}) supplied to an electrical grid (16), wherein the photovoltaic panel (12) is connected with a positive pole (18a) and the negative pole (18b) to the DC link (22) of the inverter (24);
during recovery operation, opening the switch (30) for disconnecting the negative pole (18b) of the photovoltaic panel (12) from the negative output (20b) of the DC link (22), when the voltage falls below the threshold voltage;
during recovery operation, when the negative pole (18b) of the photovoltaic panel (12) is disconnected from the DC link (22) of the inverter (24), supplying the positive pole (18a) of the photovoltaic panel (12) with a positive voltage (V_{DC+}) from the DC link (22);
during recovery operation, maintaining a DC link voltage (V_{DC}) in the DC link (22).

9. The method of claim 8, further comprising:
interconnecting an additional power supply (32) between the positive pole (18a) of the photovoltaic panel (12) and a positive output (20a) of the DC link (22), for raising a voltage supplied to the positive pole (18a) of the photovoltaic panel (12).

10. The method of one of claims 8 or 9, further comprising:
determining whether the photovoltaic panel (12) is producing a voltage (V_{PV}) between its positive pole (18a) and negative pole (18b);
switching to recovery operation and normal operation based on this determination.

11. The method of claim 10,
wherein the determination, whether the photovoltaic panel (12) is producing a voltage, is based on a voltage measurement.

## Patentansprüche

1. Wandlersystem (14) für ein photovoltaisches Paneel (12), wobei das Wandlersystem (14) Folgendes umfasst:
einen Wandler (24), der zum Transformieren einer DC-Spannung vom photovoltaischen Paneel (12) in eine AC-Spannung, die einem elektrischen Netz (16) zuzuführen ist, angepasst ist;
ein DC-Link (22), das mit dem Wandler (24) zusammengeschaltet ist und einen positiven DC-Linkausgang (20a), der mit einem positiven Pol (18a) des photovoltaischen Paneels (12) verbindbar ist, und einen negativen DC-Linkausgang (20b), der mit einem negativen Pol (18b) des photovoltaischen Paneels (12) verbindbar ist, bereitstellt;
einen Schalter (30) zum Trennen des negativen Pols (18b) des photovoltaischen Paneels (12) vom DC-Link (22);
eine Steuerung (28) zum Steuern des Wandlers (24) und des Schalters (30);
wobei die Steuerung (28) zum Öffnen des Schalters (30), derart, dass das photovoltaische Paneel (12) nur durch den positiven DC-Linkausgang (20a) versorgbar ist, angepasst ist;
wobei die Steuerung (28) zum Bestimmen, wann eine Spannung, die vom photovoltaischen Paneel (12) produziert wird, unter eine Schwellwertspannung abfällt, angepasst ist, **dadurch gekennzeichnet, dass** das Bestimmen, ob das photovoltaische Paneel eine Spannung produziert, auf einer tatsächlichen Zeit basiert, und
wobei die Steuerung (28) zum Bestimmen einer Nachtzeit und, wenn die Nachtzeit bestimmt wird, zum Schalten in einen Wiederherstellungsbetrieb angepasst ist, wobei die Steuerung während des Wiederherstellungsbetriebs zum Öffnen des Schalters (30), derart, dass der positive Pol (18a) des photovoltaischen Paneels (12) vom DC-Link (22) mit einer positiven Spannung versorgt wird, angepasst ist, wobei die Steuerung (28) während des Wiederherstellungsbetriebs, wenn der Schalter (30) geöffnet wird, zum Aufrechterhalten einer DC-Linkspannung angepasst ist;
wobei die Steuerung zum Bestimmen einer Tagzeit und, wenn eine Tagzeit bestimmt wird, zum Schalten in einen Normalbetrieb angepasst ist, wobei die Steuerung während des Normalbetriebs zum Schließen des Schalters (30), um den negativen Pol (18b) des photovoltaischen Paneels (12) mit dem negativen Ausgang (20b) eines DC-Links (22) zu verbinden, angepasst ist.

2. Wandlersystem (14) nach Anspruch 1, das ferner Folgendes umfasst:
eine zusätzliche Stromversorgung (32) zum Erzeugen einer zusätzlichen DC-Spannung;
einen zweiten Schalter (34) zum Zusammenschalten das photovoltaischen Paneels (12) mit der zusätzlichen Stromversorgung (32), derart, dass die zusätzliche DC-Spannung von der zusätzlichen Stromversorgung (32) zu einer positiven DC-Linkspannung hinzugefügt wird.

3. Wandlersystem (14) nach Anspruch 2,
wobei die zusätzliche DC-Spannung höher als 100 V ist.

4. Wandlersystem (14) nach Anspruch 2 oder 3, das ferner Folgendes umfasst:
eine Hilfsstromversorgung (36) zum Versorgen der Steuerung (28) mit Strom;
wobei die zusätzliche Stromversorgung (32) mit der Hilfsstromversorgung (36) einen gemeinsamen Transformator (38) hat.

5. Wandlersystem (14) nach Anspruch 2 oder 3, das ferner Folgendes umfasst:
eine Hilfsstromversorgung (36) zum Versorgen der Steuerung (28) mit Strom;
wobei die zusätzliche Stromversorgung (32) von der Hilfsstromversorgung (36) versorgt wird.

6. Wandlersystem (14) nach einem der vorhergehenden Ansprüche,
wobei der Wandler (24) ein transformatorloser Wandler ist, derart, dass das photovoltaische Paneel (12) während des Betriebs des Wandlersystems (14) galvanisch mit dem elektrischen Netz (16) verbunden ist.

7. Photovoltaisches Paneelsystem (10), das Folgendes umfasst:
ein Wandlersystem (14) nach einem der vorhergehenden Ansprüche; und
ein photovoltaisches Paneel (12), das mit dem Umformersystem verbunden ist;
wobei, wenn der Schalter (30) im negativen DC-Eingang (20b) geöffnet ist, der negative Pol (18b) des photovoltaischen Paneels (12) potenzialfrei ist.

8. Verfahren zum Wiederherstellen eines qualitätsgeminderten photovoltaischen Paneels (12), wobei das Verfahren Folgendes umfasst:
Bestimmen, wann eine Spannung, die vom photovoltaischen Paneel (12) produziert wird, unter eine Schwellwertspannung abfällt, wobei das Bestimmen, ob das photovoltaische Paneel eine Spannung produziert, auf einer tatsächlichen Zeit basiert;
Schalten in einen Wiederherstellungsbetrieb, wenn eine Nachtzeit bestimmt wird, und Schalten in einen Normalbetrieb, wenn eine Tagzeit bestimmt wird;
während des Normalbetriebs Schließen eines Schalters (30), um einen negativen Pol (18b) des photovoltaischen Paneels (12) mit einem negativen Ausgang (20b) eines DC-Links (22) zu verbinden;
während des Normalbetriebs Umwandeln einer DC-Spannung (V_{PV}) vom photovoltaischen Paneel (12) mit einem Wandler (24) in eine AC-Spannung (V_{g}), die einem elektrischen Netz (16) zugeführt wird, wobei das photovoltaische Paneel (12) mit einem positiven Pol (18a) und dem negativen Pol (18b) des DC-Links (22) des Wandlers (24) verbunden ist;
während des Wiederherstellungsbetriebs Öffnen des Schalters (30), um den negativen Pol (18b) des photovoltaischen Paneels (12) vom negativen Ausgang (20b) des DC-Links (22) zu trennen, wenn die Spannung unter die Schwellwertspannung abfällt;
während des Wiederherstellungsbetriebs, wenn der negative Pol (18b) des photovoltaischen Paneels (12) vom DC-Link (22) des Wandlers (24) getrennt wird, Versorgen des positiven Pols (18a) des photovoltaischen Paneels (12) mit einer positiven Spannung (V_{DC+}) vom DC-Link (22);
während des Wiederherstellungsbetriebs Aufrechterhalten einer DC-Linkspannung (V_{DC}) im DC-Link (22).

9. Verfahren nach Anspruch 8, das ferner Folgendes umfasst:
Zwischenschalten einer zusätzlichen Stromversorgung (32) zwischen dem positiven Pol (18a) des photovoltaischen Paneels (12) und einem positiven Ausgang (20a) des DC-Links (22), um eine Spannung, die dem positiven Pol (18a) des photovoltaischen Paneels (12) zugeführt wird, zu erhöhen.

10. Verfahren nach einem der Ansprüche 8 oder 9, das ferner Folgendes umfasst:
Bestimmen, ob das photovoltaische Paneel (12) zwischen seinem positiven Pol (18a) und seinem negativen Pol (18b) eine Spannung (V_{PV}) produziert;
Schalten in den Wiederherstellungsbetrieb und den Normalbetrieb auf Basis dieser Bestimmung.

11. Verfahren nach Anspruch 10,
wobei das Bestimmen, ob das photovoltaische Paneel (12) eine Spannung produziert, auf einer Spannungsmessung basiert.

## Revendications

1. Système d'onduleur (14) pour un panneau photovoltaïque (12), le système d'onduleur (14) comprenant :
un onduleur (24) adapté pour transformer une tension continue provenant du panneau photovoltaïque (12) en une tension alternative devant être fournie à un réseau électrique (16) ;
une liaison à courant continu (22) interconnectée avec l'onduleur (24) et fournissant une sortie positive (20a) de liaison à courant continu pouvant être connectée à un pôle positif (18a) du panneau photovoltaïque (12) et une sortie négative (20b) de liaison à courant continu pouvant être connectée à un pôle négatif (18b) du panneau photovoltaïque (12) ;
un interrupteur (30) pour déconnecter le pôle négatif (18b) du panneau photovoltaïque (12) de la liaison à courant continu (22) ;
une unité de commande (28) pour commander l'onduleur (24) et l'interrupteur (30) ;
dans lequel l'unité de commande (28) est adaptée pour ouvrir l'interrupteur (30), de sorte que le panneau photovoltaïque (12) puisse être alimenté uniquement par la sortie positive (20a) de liaison à courant continu ;
dans lequel l'unité de commande (28) est adaptée pour déterminer quand une tension produite par le panneau photovoltaïque (12) chute en dessous d'une tension de seuil, **caractérisé en ce que** la détermination, à savoir si le panneau photovoltaïque produit une tension, est basée sur un temps réel, et
dans lequel l'unité de commande (28) est adaptée pour déterminer une période de nuit, et pour passer à un fonctionnement de récupération lorsque la période de nuit est déterminée, dans lequel l'unité de commande est adaptée pour ouvrir l'interrupteur (30) pendant le fonctionnement de récupération, de sorte que le pôle positif (18a) du panneau photovoltaïque (12) soit alimenté avec une tension positive provenant de la liaison à courant continu (22), dans lequel l'unité de commande (28) est adaptée pour maintenir une tension de liaison à courant continu pendant le fonctionnement de récupération, lorsque l'interrupteur (30) est ouvert ;
dans lequel l'unité de commande est adaptée pour déterminer une période de jour, et pour passer à un fonctionnement normal lorsqu'une période de jour est déterminée, dans lequel l'unité de commande est adaptée pour fermer l'interrupteur (30) pendant le fonctionnement normal afin de connecter le pôle négatif (18b) du panneau photovoltaïque (12) à la sortie négative (20b) d'une liaison à courant continu (22).

2. Système d'onduleur (14) de la revendication 1, comprenant en outre :
une alimentation électrique supplémentaire (32) pour générer une tension continue supplémentaire ;
un second interrupteur (34) pour interconnecter le panneau photovoltaïque (12) à l'alimentation électrique supplémentaire (32), de sorte que la tension continue supplémentaire provenant de l'alimentation électrique supplémentaire (32) soit ajoutée à une tension positive de liaison à courant continu.

3. Système d'onduleur (14) de la revendication 2,
dans lequel la tension continue supplémentaire est supérieure à 100 V.

4. Système d'onduleur (14) de la revendication 2 ou 3, comprenant en outre :
une alimentation électrique auxiliaire (36) pour alimenter l'unité de commande (28) en énergie ;
dans lequel l'alimentation électrique supplémentaire (32) a un transformateur (38) commun avec l'alimentation électrique auxiliaire (36).

5. Système d'onduleur (14) de la revendication 2 ou 3, comprenant en outre :
une alimentation électrique auxiliaire (36) pour alimenter l'unité de commande (28) en énergie ;
dans lequel l'alimentation électrique supplémentaire (32) est fournie par l'alimentation électrique auxiliaire (36).

6. Système d'onduleur (14) de l'une des revendications précédentes,
dans lequel l'onduleur (24) est un onduleur sans transformateur, de sorte que le panneau photovoltaïque (12) soit connecté galvaniquement au réseau électrique (16) pendant le fonctionnement du système d'onduleur (14).

7. Système de panneau photovoltaïque (10), comprenant :
un système d'onduleur (14) selon l'une des revendications précédentes ; et
un panneau photovoltaïque (12) connecté au système de convertisseur ;
dans lequel, lorsque l'interrupteur (30) de l'entrée négative (20b) de courant continu est ouvert, le pôle négatif (18b) du panneau photovoltaïque (12) flotte.

8. Procédé de récupération d'un panneau photovoltaïque (12) dégradé, le procédé comprenant les étapes suivantes :
déterminer quand une tension produite par le panneau photovoltaïque (12) chute en dessous d'une tension de seuil, dans lequel la détermination, à savoir si le panneau photovoltaïque produit une tension, est basée sur un temps réel ;
passer à un fonctionnement de récupération lorsqu'une période de nuit est déterminée, et passer à un fonctionnement normal lorsqu'une période de jour est déterminée ;
pendant le fonctionnement normal, fermer un interrupteur (30) pour connecter un pôle négatif (18b) du panneau photovoltaïque (12) à une sortie négative (20b) d'une liaison à courant continu (22) ;
pendant le fonctionnement normal, convertir, à l'aide d'un onduleur (24), une tension continue (V_{PV}) provenant du panneau photovoltaïque (12) en une tension alternative (V_{g}) fournie à un réseau électrique (16), dans lequel le panneau photovoltaïque (12) est connecté à un pôle positif (18a), et le pôle négatif (18b) est connecté à la liaison à courant continu (22) de l'onduleur (24) ;
pendant le fonctionnement de récupération, ouvrir l'interrupteur (30) pour déconnecter le pôle négatif (18b) du panneau photovoltaïque (12) de la sortie négative (20b) de la liaison à courant continu (22), lorsque la tension chute en dessous de la tension de seuil ;
pendant le fonctionnement de récupération, lorsque le pôle négatif (18b) du panneau photovoltaïque (12) est déconnecté de la liaison à courant continu (22) de l'onduleur (24), alimenter le pôle positif (18a) du panneau photovoltaïque (12) avec une tension positive (V_{DC+}) provenant de la liaison à courant continu (22) ;
pendant le fonctionnement de récupération, maintenir une tension de liaison à courant continu (V_{DC}) dans la liaison à courant continu (22).

9. Procédé de la revendication 8, comprenant en outre l'étape suivante :
interconnecter une alimentation électrique supplémentaire (32) entre le pôle positif (18a) du panneau photovoltaïque (12) et une sortie positive (20a) de la liaison à courant continu (22), pour augmenter une tension fournie au pôle positif (18a) du panneau photovoltaïque (12).

10. Procédé de l'une des revendications 8 ou 9, comprenant en outre les étapes suivantes :
déterminer si le panneau photovoltaïque (12) produit une tension (V_{PV}) entre son pôle positif (18a) et son pôle négatif (18b) ;
passer à un fonctionnement de récupération et à un fonctionnement normal sur la base de cette détermination.

11. Procédé de la revendication 10,
dans lequel la détermination, à savoir si le panneau photovoltaïque (12) produit une tension, est basée sur une mesure de tension.
